# EUROPÄISCHE PATENTSCHRIFT

(11) **EP 4 146 997 B1**
(45) Veröffentlichungstag und Bekanntmachung des Hinweises auf die Patenterteilung: **10.06.2026**
(21) Anmeldenummer: 21722898.0
(22) Anmeldetag: 04.05.2021
(51) Int. Cl.: F27B 7/36, C04B 7/47, F27B 7/38, F27B 7/42, C04B 7/43

(54) **ANLAGE ZUR THERMISCHEN BEHANDLUNG VON FLUGFÄHIGEM ROHMATERIAL UND VERFAHREN ZUM BETREIBEN EINER SOLCHEN ANLAGE**
INSTALLATION FOR THE THERMAL TREATMENT OF DISPERSIBLE RAW MATERIAL, AND METHOD FOR OPERATING SUCH AN INSTALLATION
INSTALLATION DE TRAITEMENT THERMIQUE DE MATIÈRE PREMIÈRE DISPERSIBLE ET PROCÉDÉ DE FONCTIONNEMENT D'UNE TELLE INSTALLATION

(30) Priorität: 05.05.2020 DE 102020205672; 05.05.2020 BE 202005300
(43) Veröffentlichungstag der Anmeldung: 15.03.2023
(73) Patentinhaber: thyssenkrupp Polysius GmbH, 59269 Beckum (DE); Heidelberg Materials AG, 69120 Heidelberg (DE); Dyckerhoff GmbH, 65203 Wiesbaden (DE); Vicat SA, 38080 L'Isle-d'Abeau (FR); SCHWENK Zement GmbH & Co. KG, 89077 Ulm (DE)
(72) Erfinder: DINKOVA, Anna Ivanova, 44287 Dortmund (DE); WILLMS, Eike, 44309 Dortmund (DE); LEMKE, Jost, 59320 Ennigerloh (DE); LAMPE, Karl, 59320 Ennigerloh (DE)
(74) Vertreter: thyssenkrupp Intellectual Property GmbH
(86) Internationale Anmeldenummer: PCT/EP2021/061721
(87) Internationale Veröffentlichungsnummer: WO 2021/224252

(56) Entgegenhaltungen:
- DE-A1- 3 037 929

## Beschreibung

Die Erfindung betrifft ein Verfahren zur thermischen Behandlung von flugfähigem Rohmaterial, insbesondere Zementrohmehl und/oder mineralische Produkte.

Aus dem Stand der Technik ist es bekannt, beispielsweise Calcinatoren zur thermischen Behandlung von Rohmaterialien insbesondere in Zementherstellungsanlagen einzusetzen. Es ist außerdem bekannt, sauerstoffhaltiges Gas zur Verbrennung von kohlenstoffhaltigen Brennstoff in den Drehrohrofen oder den Calcinator einer Zementherstellungsanlage einzuführen. Zur Reduzierung der Abgasmenge und um auf aufwändige Reinigungsverfahren verzichten zu können, ist es beispielsweise aus der DE 10 2018 206 673 A1 bekannt, ein möglichst sauerstoffreiches Verbrennungsgas zu verwenden, sodass der CO2-Gehalt in dem Abgas hoch ist. Die DE 10 2018 206 673 A1 offenbart das Einleiten eines sauerstoffreichen Gases in den Kühlereinlassbereich zur Vorwärmung des Gases und Kühlung des Klinkers. In der DE3037929 A1 wird ein ähnlicher Kalzinator beschrieben, in dem Luft in den Kalzinator eingeleitet wird.

Bei der Verwendung von mit Sauerstoff angereicherten Verbrennungsgasen, die einen hohen Sauerstoffanteil von mindestens 30% bis 100% aufweisen, können in dem Calcinator und dem Ofen sehr hohe Temperaturen entstehen. Treten diese hohen Temperaturen über einen längeren Zeitraum oder dauerhaft im wandnahen Bereich des Calcinators auf, kann daraus eine Beschädigung der Innenwand des Calcinators resultieren. Beim Auftreten von heißen Zonen in Kombination mit dem eingeleiteten Heißmehl sind auch Schmelzphasen des zu kalzinierenden Heißmehls zu erwarten.

Davon ausgehend ist es Aufgabe der vorliegenden Erfindung, eine Anlage zur thermischen Behandlung von flugfähigen Materialien bereitzustellen, wobei eine sichere Betriebsweise der Anlage gewährleistet sein soll und gleichzeitig ein Abgas mit einem hohen CO2- Gehalt erhalten wird.

Diese Aufgabe wird erfindungsgemäß durch ein Verfahren mit den Merkmalen des unabhängigen Verfahrensanspruchs 1 gelöst. Vorteilhafte Weiterbildungen ergeben sich aus den abhängigen Ansprüchen.

Eine Anlage zur thermischen Behandlung von flugfähigem Rohmaterial, insbesondere carbonathaltige Materialien, vorzugsweise Zementrohmehl und/oder mineralische Produkte umfasst eine von Heißgasen durchströmbare Steigleitung, wobei die Steigleitung zumindest einen Brennstoffeinass zum Einlassen von Brennstoff in die Steigleitung aufweist. Die Steigleitung weist zumindest einen Rohmehleinlass zum Einlassen von Rohmehl in die Steigleitung auf, der in Strömungsrichtung des Gases innerhalb der Steigleitung stromaufwärts des Brennstoffeinlasses angeordnet ist.

Bei der Anlage zur thermischen Behandlung von flugfähigem Rohmaterial handelt es sich beispielsweise um einen Calcinator zur Calcinierung von insbesondere vorgewärmten Rohmaterial, beispielsweise in einer Anlage zur Herstellung von Zement oder Dekarbokanitisierung glühverlusthaltiger Materialien. Die Anlage zur thermischen Behandlung von flugfähigem Rohmaterial ist beispielweise in einer Einrichtung zur Herstellung von calciniertem Kalkstein oder Dolomit, zur Aufbereitung recalcinierter Reststoffe oder REA-Gips angeordnet. Bei dem Rohmaterial handelt es sich beispielsweise um eine Mischung aus Kalkstein oder Kalkmergel und Ton, die bei Bedarf mit Eisenerz, Sand oder weiteren Stoffen ergänzt wird oder um carbonathaltigen Materialien wie Kalkstein, Dolomit oder diese enthaltende Mischungen. Bei dem Brennstoff handelt es sich beispielsweise um Kohle, Petrolkoks, Erdgas, aufbereitete Siedlungs- und Gewerbeabfälle, Klärschlamm, Biomasse oder flüssige Lösungsmittel.

Die Steigleitung umfasst vorzugsweise eine sich in vertikaler Richtung erstreckende Leitung, die von einem Heißgas, insbesondere von unten nach oben, durchströmbar ist. Die Steigleitung weist vorzugsweise einen Heißgaseinlass zum Einlassen von Heißgasen mit einem Sauerstoffanteil von 20% bis 100%, vorzugsweise 30% bis 80% auf. Das untere Ende der Steigleitung bildet vorzugweise den Heißgaseinlass zum Einlassen der Heißgase in die Steigleitung. Optional weist die Steigleitung einen separat zum Heißgaseinlass angeordneten Verbrennungsgaseinlass zum Einlassen von Verbrennungsgas mit einem Sauerstoffanteil von 20ol% bis 100Vol%, insbesondere 30Vol% bis 80Vol%. Bei dem Heißgas handelt es sich vorzugsweise um Abgas einer Verbrennungsanlage, wie beispielsweise ein Ofen einer Zementherstellungsanlage. Das Heißgas weist vorzugsweise eine Sauerstoffkonzentration von 20Vol% bis 100 Vol%, insbesondere 30Vol% bis 80Vol%, auf. Die Steigleitung weist beispielsweise eine Mehrzahl von Brennstoffeinlässen zum Einlassen von Brennstoff in die Steigleitung auf. Jeder Brennstoffeinlass umfasst insbesondere zumindest eine oder eine Mehrzahl von Brennstoffleitungen, die sich vorzugsweise in radialer Richtung der Steigleitung und durch die Wand der Steigleitung erstrecken. Vorzugsweise weist die Steigleitung eine Mehrzahl von Rohmehleinlässen auf, wobei zumindest ein Rohmehleinlass stromaufwärts aller Brennstoffeinlässe angeordnet ist. Vorzugsweise weist die Steigleitung zwei Rohmehleinlässe auf, die in Strömungsrichtung des Gases hintereinander angeordnet sind. Vorzugsweise ist zwischen zwei Rohmehleinlässen zumindest ein Brennstoffeinlass angeordnet.

Die Aufgabe des Rohmehls stromaufwärts des Brennstoffeinlasses verhindert ein Überhitzen des Rohmehls innerhalb der Steigleitung und somit beispielsweise eine Beschädigung der Innenwand der Steigleitung. Die durch die Feuerung des Brennstoffs erzeugte Verbrennungszone kann die Wärme direkt an die Partikel des Rohmehls abgeben.

Vorteilhafterweise ist das Feststoff-Gas-Verhältnis in der Anlage, vorzugsweise dem Calcinator, deutlich höher verglichen mit konventionellen Anlagen mit Luft als Oxidator. Es treten beispielsweise lokal Feststoffbeladungen von mehr als 1,5 kg je kg Gas auf, insbesondere 1,5 bis 8 kg je kg Gas. In der Anlage wird vorzugsweise der größte Teil, mehr als 60%, beispielsweise ca. 80 %, der Brennstoffwärme umgesetzt. Durch das eingetragene Rohmehl stromaufwärts des Brennstoffeinlasses ist trotz anfänglicher Sauerstoffkonzentration von 40-80 %, welche eine intensive Feuerung initiiert, eine ausreichende Wärmesenke gegeben, die eine Überhitzung verhindert. Falls grobstückiger Ersatzbrennstoff, beispielsweise mit Kantenlängen von >100 mm verbrannt werden soll, ist vorzugsweise ein geneigter Bereich mit höherer Verweildauer für den Brennstoff vorzusehen. Beispiele für solche geneigten Bereiche sind Treppenstufen, Vorschubroste, Rückschubroste oder andere mechanische oder pneumatische Vorrichtungen. Diese Vorrichtungen fungieren beispielsweise als Brennkammern, Vorbrennkammern oder dienen lediglich der Trocknung und Vorwärmung bzw. Teilvergasung der eingetragenen Brennstoffe. Die Brennstoffe können beliebiger Art hinsichtlich ihrer Korngrößenverteilung und ihres Heizwertes sein.

Die Kalzinationsreaktion verläuft optional unter CO2 Partialdrücken zwischen 10%-60% am Anfang des Calcinators und bis zu 95% am Ende des Calcinators. Dementsprechend verläuft die Kalzinationsreaktion vorzugsweise bei höheren Temperaturen als im konventionellen Anlage von 700 bis 1100°C, vorzugsweise 900-1000°C.

Beispielsweise weist die Steigleitung zumindest einen Inertgaseinlass zum Einlassen von Inertgas in die Steigleitung auf. Beispielsweise weist die Steigleitung eine Mehrzahl, insbesondere zwei oder drei, Inertgaseinlässe auf, die in Strömungsrichtung des Gases hintereinander in der Steigleitung angeordnet sind. Beispielsweise sind der Brennstoffeinlass und der Inertgaseinlass separat zueinander angeordnet und bilden jeweils einen Einlass in die Steigleitung aus. Vorzugsweise bilden der Brennstoffeinlass und der Inertgaseinlass zusammen einen Einlass in die Steigleitung aus. Der Brennstoff und das Inertgas werden vorzugsweise in einer gemeinsamen Leitung jeweils der Steigleitung zugeführt. Dies ist konstruktiv weniger aufwändig und somit kostengünstiger. Das Inertgas dient vorzugsweise zusätzlich als eine Temperatursenke und verhindert zudem das spontane Zünden des eingetragenen Brennstoffes direkt am Brennstoffeinlass, insbesondere an einem Brenner- oder am Brennerlanzenmund.

Bei dem Inertgas handelt es sich beispielsweise um CO2 oder Wasserdampf. Das Zuführen von Inertgas in die Anlage bietet den Vorteil einer Verzögerung, insbesondere einer Verlangsamung, der Verbrennung, sodass eine Beschädigung der Anlage verhindert wird.

Die Steigleitung weist beispielsweise eine Mehrzahl von Inertgaseinlässen, insbesondere zum Einlassen von unterschiedlichen Inertgasen auf. Es ist ebenfalls denkbar, dass die Steigleitung eine Mehrzahl von Brennstoffaufgabevorrichtungen, insbesondere zwei oder drei Brennstoffaufgabevorrichtungen, aufweist, denen jeweils ein Inertgaseinlass zugeordnet ist. Die Brennstoffaufgabevorrichtungen sind vorzugsweise zueinander beabstandet über die Länge und/ oder die Breite der Steigleitung angeordnet. Beispielsweise sind die Brennstoffaufgabevorrichtungen in einem Winkel von 0°, vorzugsweise 60° bis 270° über den Querschnitt der Steigleitung des Calcinators versetzt zueinander angeordnet. Es können dabei unterschiedliche Arten von Brennstoffaufgabevorrichtungen miteinander kombiniert und auch unterschiedlich angeordnet werden.

Beispielsweise weist die Steigleitung zumindest zwei in Strömungsrichtung des Gases hintereinander angeordnete Behandlungsbereiche auf, die optional voneinander verschiedene Durchmesser aufweisen und wobei der in Strömungsrichtung des Gases vordere Behandlungsbereich einen Rohmehleinlass zum Einlassen von Rohmehl in den vorderen Behandlungsbereich aufweist. Der vordere Behandlungsbereich weist vorzugsweise einen geringeren Durchmesser auf als die stromabwärts angeordneten Behandlungsbereiche.

Ein Behandlungsbereich ist beispielsweise ein Abschnitt des Steigrohrs, in dem zumindest ein Einlass zum Einlassen von Rohmehl, Brennstoff und/ oder Inertgas angeordnet ist. Der vordere Behandlungsbereich schließt sich in Strömungsrichtung des Gases vorzugsweise direkt an eine Querschnittsverengung mit einem relativ zu dem Behandlungsbereich geringeren und vorzugsweise konstantem Durchmesser an. Jeder Behandlungsbereich weist beispielsweise einen mittleren Bereich mit einem konstanten Durchmesser und einem jeweils direkt davor und dahinter angeordneten Bereich mit einem sich ändernden, verringernden oder vergrößernden, Durchmesser auf. In Strömungsrichtung des Gases weist der Behandlungsbereich vorzugsweise einen sich erweiternden Bereich mit einem in Strömungsrichtung ansteigenden Querschnitt auf. An den sich erweiternden Bereich schließt sich der Bereich mit konstantem Querschnitt an. An den Bereich mit konstantem Querschnitt schließt sich vorzugsweise ein weiterer Bereich mit sich verringernden oder erweiterndem Querschnitt an. Der sich erweiternde Bereich mit einem größer werdenden Querschnitt weist vorzugsweise einen Öffnungswinkel von 10° bis 60°, vorzugsweise 12° bis 30° auf. Insbesondere schließt sich der in Strömungsrichtung vordere Abschnitt des Behandlungsbereichs mit dem sich erweiternden Querschnitt direkt an eine Querschnittsverengung des Steigrohrs an. Das Steigrohr weist vorzugsweise mehr als zwei, insbesondere drei oder vier hintereinander angeordnete Behandlungsbereiche auf.

Beispielsweise weist die Steigleitung zwischen den Behandlungsbereichen zumindest eine Querschnittsverengung auf, die einen geringeren Durchmesser als die Behandlungsbereiche aufweist. Bei einer Querschnittsverengung handelt es sich vorzugsweise um einen Abschnitt des Steigrohrs mit einem konstanten Durchmesser, der geringer ist als der in Strömungsrichtung direkt vor und hinter der Querschnittsverengung angeordnete Abschnitt des Steigrohrs. Zwischen zwei benachbarten Behandlungsbereichen ist beispielsweise eine Querschnittsverengung angeordnet. Eine solche Querschnittsverengung sorgt für eine lokale Beschleunigung der Strömung, wobei diese in dem sich in Strömungsrichtung daran anschließenden Bereich mit einem größeren Durchmesser verlangsamt wird. Dies sorgt für eine Durchmischung des Gases mit dem Rohmehl.

Beispielsweise ist der Brennstoffeinlass stromabwärts des vorderen Behandlungsbereichs angeordnet.

Beispielsweise weist die Anlage zwei oder mehr Brennstoffeinlässe auf, die insbesondere alle stromabwärts des vorderen Behandlungsbereichs angeordnet sind. Vorzugsweise ist in dem vorderen Behandlungsbereich ausschließlich ein oder mehr Einlässe zum Einlassen von Rohmehl in die Sie Steigleitung angeordnet.

Beispielsweise weist die Steigleitung stromaufwärts des vorderen Behandlungsbereichs eine weitere Querschnittsverengung auf. Der vordere Behandlungsbereich ist vorzugsweise zwischen zwei Querschnittsverengungen angeordnet. Vorzugsweise wird zumindest ein Teil des Rohmehls in den vorderen Behandlungsbereich aufgeben, wobei die Querschnittsverengungen für eine Reduzierung der Strömungsgeschwindigkeit in dem Behandlungsbereich und somit für eine bessere Durchmischung des Rohmehls mit dem Heißgas führt. Lokale Bereich mit sehr hohen Temperaturen werden vermieden und eine Beschädigung der Wand des Steigrohrs wird dadurch verhindert.

Beispielsweise weist die Steigleitung zumindest zwei Rohmehleinlässe zum Einlassen von Rohmehl in die Steigleitung auf, wobei die Rohmehleinlässe jeweils in unterschiedlichen Behandlungsbereichen der Steigleitung angeordnet sind. Insbesondere sind die Rohmehleinlässe auf unterschiedlichen Höhenniveaus, vorzugsweise in Strömungsrichtung der Steigleitung hintereinander, angeordnet. Vorzugsweise weist jeder Behandlungsbereich zumindest einen Rohmehleinlass auf. Dies ermöglicht eine gestufte Aufgabe von Rohmehl in die Steigleitung, sodass Rohmehl an unterschiedlichen Bereichen der Steigleitung eingeleitet und jeweils optimal mit dem Heißgas vermischt wird.

Beispielsweise weist zumindest einer der Brennstoffeinlässe zumindest eine oder eine Mehrzahl von sich in radialer Richtung der Steigleitung erstreckenden Brennstoffleitungen auf, die sich durch die Steigleitungswand in die Steigleitung erstrecken und wobei zumindest einer der Rohmehleinlässe zumindest eine oder eine Mehrzahl von sich in radialer Richtung der Steigleitung erstreckenden Rohmehlleitungen aufweist, die sich durch die Steigleitungswand in die Steigleitung erstrecken. Gemäß einer weiteren Ausführungsform erstreckt sich die Brennstoffleitung in einem Winkel von 0° bis 50°, insbesondere 20° bis 30°, relativ zu der Rohmehlleitung in die Steigleitung.

In der Steigleitung ist beispielsweise zumindest eine Temperaturmesseinrichtung zur Ermittlung der Temperatur innerhalb der Steigleitung angeordnet, wobei die Anlage eine Regelungseinrichtung aufweist, die mit der Temperaturmesseinrichtung zur Übermittlung der ermittelten Temperatur verbunden ist und wobei die Regelungseinrichtung derart ausgebildet ist, dass sie die Menge an Rohmehl, Inertgas und/ oder Brennsoff in die Steigleitung in Abhängigkeit der ermittelten Temperatur regelt. Vorzugsweise weisen die Rohmehleinlässe, die Brennstoffeinlässe und/ oder die Inertgaseinlässe jeweils ein Dosierorgan, wie eine Klappe oder ein Ventil, auf zur Einstellung der Menge an in die Steigleitung einzuleitendes Rohmehl, Inertgas oder einzuleitenden Brennstoff auf. Das jeweilige Dosierorgan ist vorzugsweise mit der Regelungseinrichtung zur Einstellung der der Menge an in die Steigleitung einzuleitendes Rohmehl, Inertgas oder einzuleitenden Brennstoff verbunden.

Bei der Temperaturmesseinrichtung handelt es sich vorzugsweise um Thermoelemente oder akustische GastemperaturmessungDie Temperaturmesseinrichtung ist insbesondere an der Innenwand der Steigleitung angebracht und vorzugsweise zur Ermittlung der Gastemperatur innerhalb der Steigleitung ausgebildet. Beispielsweise weist die Steigleitung zwei Temperaturmesseinrichtungen auf, die in Strömungsrichtung hintereinander angeordnet sind. Insbesondere sind die Temperaturmesseinrichtungen jeweils einem Brennstoffeinlass zugeordnet und stromabwärts, vorzugsweise direkt an dem Brennstoffeinlass oder in der nahen Umgebung, angeordnet. Die Temperaturmesseinrichtung ist insbesondere zur Ermittlung der Temperatur an oder in der Nähe eines Brennstoffeinlasses ausgebildet und angeordnet.

Die Regelungseinrichtung ist vorzugsweise derart ausgebildet, dass sie die ermittelte Temperatur mit einem vorabbestimmten Temperaturgrenzwert oder Temperaturgrenzbereich vergleicht und bei einer Abweichung der ermittelten Temperatur von dem Temperaturgrenzwert oder Temperaturgrenzbereich die Menge an Brennstoff, Rohmehl und/ oder Inertgas in die Steigleitung erhöht oder verringert. Überschreitet beispielsweise die mittels der Temperaturmesseinrichtung ermittelte Temperatur den Temperaturgrenzwert oder den Temperaturgrenzbereich, wird die Menge an Brennstoff, insbesondere der durch den der jeweiligen Temperaturmesseinrichtung zugeordneten Brennstoffeinlass in die Steigleitung strömt, verringert. Unterschreitet beispielsweise die mittels der Temperaturmesseinrichtung ermittelte Temperatur den Temperaturgrenzwert oder den Temperaturgrenzbereich, wird die Menge an Brennstoff, der durch den der jeweiligen Temperaturmesseinrichtung zugeordneten Brennstoffeinlass in die Steigleitung strömt, erhöht.

Insbesondere ist die Regelungseinrichtung derart ausgebildet, dass sie die Menge an Inertgas in die Steigleitung verringert oder erhöht, wenn die ermittelte Temperatur von dem Temperaturgrenzwert oder Temperaturgrenzbereich abweicht. Überschreitet beispielsweise ermittelte Temperatur den Temperaturgrenzwert oder den Temperaturgrenzbereich, wird die Menge an Inertgas, die vorzugsweise durch den der jeweiligen Temperaturmesseinrichtung zugeordneten Inertgaseinlass in die Steigleitung strömt, verringert. Unterschreitet beispielsweise die ermittelte Temperatur den Temperaturgrenzwert oder den Temperaturgrenzbereich, wird die Menge an Inertgas, die vorzugsweise durch den der jeweiligen Temperaturmesseinrichtung zugeordneten Inertgaseinlass in die Steigleitung strömt, erhöht. Bei dem der jeweiligen Temperaturmesseinrichtung zugeordneten Inertgaseinlass oder Brennstoffeinlass handelt es sich vorzugsweise um den Inertgaseinlass und Brennstoffeinlass, der der jeweiligen Temperaturmesseinrichtung am nächsten ist.

Überschreitet beispielsweise die mittels der Temperaturmesseinrichtungen ermittelte Temperatur den Temperaturgrenzwert oder den Temperaturgrenzbereich, wird die Menge an Rohmehl, die durch zumindest einen der Rohmehleinlässe in die Steigleitung strömt, erhöht. Vorzugsweise bleibt die gesamte in die Steigleitung strömende Menge an Rohmehl konstant, sodass die Rohmehlmenge an einem Rohmehleinlass verringert und an dem zumindest einen weiteren Rohmehleinlass entsprechend erhöht wird. Unterschreitet beispielsweise die mittels der Temperaturmesseinrichtung ermittelte Temperatur den Temperaturgrenzwert oder den Temperaturgrenzbereich, wird die Menge an Rohmehl, die durch zumindest einen der Rohmehleinlässe strömt, verringert.

Innerhalb der Steigleitung der Anlage ist beispielsweise zumindest ein Leitelement zum Leiten der Gasströmung angeordnet. Dadurch wird vorzugsweise eine bessere Durchmischung des Gases mit dem Rohmehl erreicht. Diese Funktion hat für die Prozessführung mit hohen Sauerstoff- und niedrigen Stickstoffgehalten dahingehend eine besondere Bedeutung, dass durch die verminderte Gasmenge in der Anlage aufgrund des fehlenden Stickstoff-Anteile sich nach Eintrag des Materials eine höhere Beladung einstellt als bei Anlagen die mit Luft als Oxidationsmittel betrieben werden. Für die Tragfähigkeit der Partikel ist es daher vorteilhaft, wenn das Material gleichmäßig über den Querschnitt der Steigleitung des Calcinators verteilt wird. Ein Absinken des Rohmehls in eine tiefere stromabwärts gelegene Zone der Steigleitung wird verhindert. Das Leitelement ist beispielsweise als eine Platte, ein Kasten, ein Kegel und/ oder eine Pyramide ausgebildet. Vorzugsweise sind innerhalb der Steigleitung eine Mehrzahl von Leitelementen angeordnet, die beispielsweise gleichmäßig zueinander beabstandet sind. Die Leitelemente sind beispielsweise aus Keramik oder einem keramischen Faserverbundwerkstoff ausgebildet. Die Leitelemente sind insbesondere innerhalb der Steigleitung und/ oder in dem Brennstoffeinlass angeordnet. Vorzugsweise ist ein Leitelement an dem Auslass des Brennstoffauslasses in die Steigleitung angeordnet, sodass der Einlass von Brennstoff in die Steigleitung mittels des Leitelements geleitet wird. Vorzugsweise erstreckt sich das Leitelement von dem Brennstoffeinlass in die Steigleitung hinein. Das Leitelement ist beispielsweise derart ausgebildet und angeordnet, dass es den Brennstoff in einem Winkel zur Innenwand des Steigrohrs leitet. Beispielsweise bildet das Leitelement einen Diffusor mit einem sich relativ zu dem Brennstoffeinlass erweiternden Querschnitt aus.

Beispielsweise weist die Anlage eine Mehrzahl von Brennstoffaufgabevorrichtungen auf, die jeweils einen Brennstoffeinlass und einen Inertgaseinlass umfassen und wobei jeder Brennstoffaufgabevorrichtung ein Leitelement zugeordnet ist. Die jeweilige Brennstoffaufgabevorrichtung ist beispielsweise auf dem gleichen Höhenniveau mit dem Leitelement angeordnet oder dem Leitelement direkt vor- oder nachgeschaltet. Dies ermöglicht eine optimierte Verteilung des Rohmehls und des Inertgases innerhalb der Steigleitung, insbesondere in dem Bereich der Brennstoffaufgabevorrichtung.

Die vorangehend beschriebene Anlage ist beispielsweise in einem Zementwerk angeordnet. Eine solche Zementherstellungsanlage umfasst vorzugsweise:
- einen Vorwärmer zum Vorwärmen von Rohmehl,
- einen Calcinator zum Kalzinieren des vorgewärmten Rohmehls, wobei es sich bei dem Calcinator um eine vorangehend beschriebene Anlage handelt,
- einen Ofen mit einem Ofenbrenner, wie beispielsweise eine Brennerlanze zum Brennen des kalzinierten Heißmehls zu Zementklinker, wobei der Ofen einen Verbrennungsgaseinlass zum Einlassen eines Verbrennungsgases in den Ofen mit einem Sauerstoffanteil von 30% bis 100% aufweist, und
- einen Kühler zum Kühlen des Zementklinkers,
- wobei der Calcinator und der Ofen jeweils mindestens einen Brennstoffeinlass zum Einlassen von Brennstoff in den Calcinator und in den Ofen aufweist.

Der Calcinator und/ oder der Ofen weist jeweils mindestens einen Inertgaseinlass zum jeweiligen Einlassen von Inertgas in den Calcinator und den Ofen auf. Bei dem Calcinator handelt es sich insbesondere um die vorangehend beschriebene Anlage zur thermischen Behandlung.

Der Vorwärmer der Zementherstellungsanlage umfasst vorzugsweise eine Mehrzahl von Zyklonstufen mit jeweils zumindest einem Zyklon zum Abscheiden von Feststoffen aus dem Gasstrom. Zwischen der letzten und der vorletzten Zyklonstufe ist der Calcinator angeordnet, der eine Steigleitung aufweist, in die das Rohmehl mittels einer Calcinatorfeuerung, die aus einer oder mehrerer Brennstellten bestehen kann, erhitzt wird.

Das in dem Vorwärmer vorgewärmte und in dem Calcinator kalzinierte Rohmehl wird anschließend dem Ofen zugeführt. Bei dem Ofen handelt es sich vorzugsweise um einen Drehrohrofen mit einem um seine Längsachse rotierbaren Drehrohr, das vorzugsweise in Förderrichtung des zu brennenden Materials leicht geneigt ist, sodass das Material bedingt durch die Rotation des Drehrohrs und die Schwerkraft in Förderrichtung bewegt wird. Der Ofen weist vorzugsweise an seinem einen Ende einen Materialeinlass zum Einlassen von vorgewärmtem, kalziniertem Rohmehl und an seinem dem Materialeinlass gegenüberliegenden Ende einen Materialauslass zum Auslassen des gebrannten Klinkers in den Kühler auf. An dem materialauslassseitigen Ende des Ofens ist vorzugsweise ein Ofenkopf angeordnet, der den Ofenbrenner zum Brennen des Materials und vorzugsweise mindestens einen Brennstoffeinlass zum Einlassen von Brennstoff in den Ofen, vorzugsweise über einen Ofenbrenner und/oder über eine Brennstofflanze, aufweist. Der Ofen weist vorzugsweise eine Sinterzone auf, in der das Material zumindest teilweise aufgeschmolzen wird und insbesondere eine Temperatur von 1500°C bis 1900°C, vorzugsweise 1450°C bis 1750°C aufweist. Die Sinterzone umfasst beispielsweise den Ofenkopf, vorzugsweise das in Förderrichtung des Materials hintere Drittel des Ofens.

Das sauerstoffhaltige Verbrennungsgas wird beispielsweise vollständig oder teilweise direkt in den Ofenkopf eingeleitet, wobei der Ofenkopf beispielsweise einen Verbrennungsgaseinlass aufweist. Vorzugsweise wird das Verbrennungsgas vollständig oder teilweise über den Materialauslass des Ofens in diesen eingeführt. Das dem Ofen zugeführte Verbrennungsgas hat beispielsweise einen Sauerstoffanteil von mehr als 30% bis 75%, vorzugsweise mehr als 95%. Das Verbrennungsgas besteht beispielsweise vollständig aus reinem Sauerstoff, wobei in diesem Fall der Sauerstoffanteil an dem Verbrennungsgas 100% beträgt. Bei dem Ofenbrenner kann es sich beispielsweise um eine Brennerlanze handeln. An den Materialauslass des Ofens schließt sich vorzugsweise der Kühler zum Kühlen des Zementklinkers an.

Der Kühler weist eine Fördereinrichtung zum Fördern des Schüttguts in Förderrichtung durch den Kühlgasraum auf. Der Kühlgasraum umfasst einen ersten Kühlgasraumabschnitt mit einem ersten Kühlgasstrom und einen sich in Förderrichtung des Schüttguts an diesen anschließenden zweiten Kühlgasraumabschnitt mit einem zweiten Kühlgasstrom. Der Kühlgasraum ist vorzugsweise nach oben durch eine Kühlgasraumdecke und nach unten durch einen dynamischen und/ oder statischen Rost, vorzugsweise durch das auf diesem liegende Schüttgut, begrenzt. Bei dem Kühlgasraum handelt es sich insbesondere um den gesamten von Kühlgas durchströmten Raum des Kühlers oberhalb des Schüttguts. Der Kühlgasstrom strömt durch den dynamischen und/ oder statischen Rost, insbesondere durch die Fördereinrichtung, durch das Schüttgut und in den Kühlgasraum. Der erste Kühlgasraumabschnitt ist vorzugsweise in Strömungsrichtung des zu kühlenden Schüttguts direkt hinter dem Kühlereinlass, insbesondere dem Materialauslass des Ofens, angeordnet. Vorzugsweise fällt der Klinker aus dem Ofen in den ersten Kühlgasraumabschnitt.

In den ersten Kühlgasraumabschnitt strömt vorzugsweise ausschließlich der erste Kühlgasstrom, der beispielsweise mittels eines Ventilators oder druckbeladenen Kessels oder entsprechende andere Vorrichtung beschleunigt wird. Der zweite Kühlgasraumabschnitt schließt sich in Förderrichtung des Schüttguts an den ersten Kühlgasraumabschnitt an und wird vorzugsweise von dem ersten Kühlgasraumabschnitt mittels einer Trennvorrichtung gastechnisch getrennt. In den zweiten Kühlgasraumabschnitt strömt vorzugsweise ausschließlich der zweite Kühlgasstrom, der beispielsweise mittels mindestens eines Ventilators beschleunigt wird.

Bei dem durch den ersten Kühlgasraumabschnitt strömenden ersten Kühlgasstrom handelt es sich beispielsweise um reinem Sauerstoff oder einem Gas mit einem Anteil von weniger als 35 Vol%, insbesondere weniger als 21 Vol%, vorzugsweise 15 Vol% oder weniger Stickstoff und/oder Argon und/ oder einem Sauerstoffanteil von mehr als 20,5%, insbesondere mehr als 30% bis 75%, vorzugsweise mehr als 95%. Der erste Kühlgasraumabschnitt schließt sich vorzugsweise direkt an den Materialauslass des Ofens, vorzugsweise an den Ofenkopf des Ofens an, sodass das Kühlgas in dem Kühler erwärmt und anschließend in den Drehrohrofen strömt und als Verbrennungsgas verwendet wird. Bei dem zweiten Kühlgasstrom handelt es sich beispielsweise um Luft.

Die Erfindung umfasst ein Verfahren zur thermischen Behandlung von flugfähigem Rohmaterial, insbesondere Zementrohmehl und/oder mineralische Produkte, aufweisen die Schritte:
- Einlassen von Brennstoff über einen Brennstoffeinlass in eine Steigleitung zur Leitung von Heißgasen und
- Einlassen von Rohmehl in die Steigleitung, wobei das Rohmehl in Strömungsrichtung des Gases stromaufwärts des Brennstoffeinlasses in die Steigleitung eingeleitet wird.

Die mit Bezug auf die Anlage beschriebenen Vorteile und Ausgestaltungen treffen in verfahrensgemäßer Entsprechung auch auf das Verfahren zur thermischen Behandlung von Rohmaterialien zu.

Vorzugsweise wird das Heißgas über einen Heißgaseinlass insbesondere von unten in die Steigleitung eingeleitet, wobei das Heißgas insbesondere eine Sauerstoffkonzentration von 20Vol% bis 100Vol%, insbesondere 30Vol% bis 90Vol% aufweist. Optional wird ein Verbrennungsgas separat zu dem Heißgas in die Steigleitung eingeleitet, wobei das Verbrennungsgas einen Sauerstoffanteil von 20Vol% bis 100Vol%, insbesondere 30Vol% bis 90Vol% aufweist. Innerhalb der Steigleitung wird beispielsweise ein CO2 Partialdruck zwischen 10%-60% am Anfang der Steigleitung und bis zu 95% am Ende der Steigleitung eingestellt. Vorzugsweise wird innerhalb der Anlage eine Temperatur von 700 bis 1100°C, vorzugsweise 900-1000°C eingestellt.

Gemäß einer ersten Ausführungsform wird ein Inertgas in die Steigleitung eingeleitet wird. Vorzugsweise wird das Inertgas stromabwärts des Rohmehleinlasses in die Steigleitung eingeleitet.

Gemäß einer weiteren Ausführungsform weist die Steigleitung zumindest zwei in Strömungsrichtung des Gases hintereinander angeordnete Behandlungsbereiche auf, die vorzugsweise voneinander verschiede Durchmesser aufweisen, und wobei das Rohmehl in den in Strömungsrichtung des Gases vorderen Behandlungsbereich eingeleitet wird.

Gemäß einer weiteren Ausführungsform wird die Temperatur mittels zumindest einer Temperaturmesseinrichtung innerhalb der Steigleitung ermittelt wird und wobei die Menge an Rohmehl, Inertgas und/ oder Brennstoff in die Steigleitung in Abhängigkeit der ermittelten Temperatur geregelt wird.

Gemäß einer weiteren Ausführungsform wird Brennstoff über zumindest zwei in Strömungsrichtung des Gases hintereinander angeordnete Brennstoffeinlässe in die Steigleitung eingeleitet und wobei an dem in Strömungsrichtung vorderen Brennstoffeinlass mehr Brennstoff als an dem anderen Brennstoffeinlass eingeleitet wird. Vorzugsweise beträgt die Brennstoffmenge an dem in Strömungsrichtung vorderen Brennstoffeinlass etwa 20 bis 120%, insbesondere 50 bis 100%, der gesamten der Steigleitung zugeführten Brennstoffmenge.

Gemäß einer weiteren Ausführungsform wird in den vorderen Behandlungsbereich eine Menge an Rohmehl eingeleitet wird, die etwa 20% bis 60% der gesamten in die Steigleitung eingeleiteten Menge an Rohmehl entspricht.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung eine Anlage zur thermischen Behandlung von Rohmaterial gemäß einem Ausführungsbeispiel.
- Fig. 2: zeigt eine schematische Darstellung einer Zementherstellungsanlage mit einer Anlage zur thermischen Behandlung gemäß Fig. 1 oder 3.
- Fig. 3: zeigt eine schematische Darstellung eine Anlage zur thermischen Behandlung von Rohmaterial gemäß einem weiteren Ausführungsbeispiel.
- Fig. 4: zeigt eine schematische Darstellung eines Ausschnitts einer Anlage zur thermischen Behandlung nach Fig. 3 gemäß einem weiteren Ausführungsbeispiel.

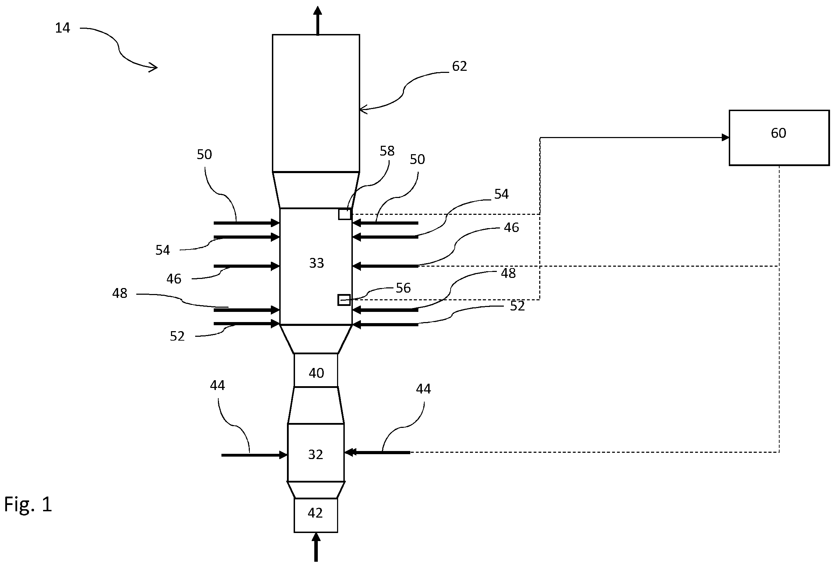

Fig. 1 zeigt eine Anlage 14 zur thermischen Behandlung von flugfähigem Rohmaterial, insbesondere Zementrohmehl und/oder mineralische Produkte. Bei einer solchen Anlage 14 handelt es sich insbesondere um einen Calcinator, der beispielsweise in einer Zementherstellungsanlage zur Kalzinierung des vorgewärmten Rohmehls eingesetzt wird. Bei dem Rohmehl handelt es sich vorzugsweise um Zementrohmehl, mineralisches Material, wie beispielsweise Kalkstein, Erze oder Ton. Das Rohmehl ist vorzugsweise eine Mischung aus Kalkstein oder Kalkmergel und Ton, die bei Bedarf mit Eisenerz, Sand oder weiteren Stoffen ergänzt wird oder carbonathaltiges Materialien wie Kalkstein, Dolomit oder diese enthaltende Mischungen.

Die Anlage 14 umfasst eine Steigleitung 62, durch welche Heißgase vorzugsweise von unten nach oben strömbar sind. Die Steigleitung 62 erstreckt sich beispielhaft in vertikaler Richtung und weist insbesondere an ihrem unteren Bereich einen Einlass zum Einlassen von heißen Gasen, wie beispielsweise Abgase einer Verbrennungseinrichtung, wie ein Drehrohrofen einer Zementherstellungsanlage. Die Strömungsrichtung des heißen Gases innerhalb der Steigleitung 62 ist mit den Pfeilen am unteren und oberen Ende der Steigleitung 62 dargestellt.

Die Steigleitung 62 weist eine Mehrzahl von unterschiedlichen Durchmessern auf. Beispielhaft weist die Steigleitung 62 zwei in Strömungsrichtung des Gases hintereinander angeordnete Behandlungsbereiche 32, 33 auf. Der erste, vordere Behandlungsbereich 32 ist in Strömungsrichtung vor dem zweiten Behandlungsbereich 33 angeordnet, wobei der Durchmesser des ersten Behandlungsbereichs 32 beispielhaft geringer ist als der des zweiten Behandlungsbereichs 33. An den zweiten Behandlungsbereich 33 schließt sich beispielhaft ein Abschnitt der Steigleitung 62 mit einem größeren Durchmesser als der zweite Behandlungsbereich 33 an. Jeder Behandlungsbereich weist beispielhaft einen im Wesentlichen konstanten Durchmesser auf. Zwischen den beiden Behandlungsbereichen 32, 33 weist die Steigleitung 62 eine Querschnittsverengung 40, insbesondere einen Bereich mit einem geringeren Durchmesser als die daran angrenzenden Behandlungsbereiche 32, 33. Beispielhaft weisen die Behandlungsbereiche 32, 33 jeweils einen Abschnitt mit einem im Wesentlichen konstanten Durchmesser und einen sich daran anschließenden Abschnitt mit einem sich ändernden, beispielsweise verringernden oder vergrößernden Durchmesser auf. Stromaufwärts des ersten Behandlungsbereichs 32 weist die Steigleitung 62 eine weitere Querschnittsverengung 42 auf, an die sich vorzugsweise direkt der erste Behandlungsbereich 32 der Steigleitung 62 anschließt. Der Durchmesser der Querschnittsverengung 42 entspricht beispielhaft dem Durchmesser der zwischen den beiden Behandlungsbereichen 32, 33 angeordneten Querschnittsverengung 40. Jeder Behandlungsbereich 32, 33 weist insbesondere zumindest einen Einlass zum Einlassen von Rohmehl, Brennstoff oder Inertgas auf.

An das untere Ende der Steigleitung 62, beispielsweise an die Querschnittsverengung 42, schließt sich beispielsweise ein Ofeneinlauf eines Drehrohrofens einer Zementherstellungsanlage an, wobei das Ofenabgas durch den Ofeneinlauf die Steigleitung geleitet wird. Es ist ebenfalls denkbar, dass das untere Ende der Steigleitung 62 mit der Abgasleitung einer Anlage zum Brennen von Kalk verbunden ist.

Die Anlage 14 weist einen ersten Rohmehleinlass 44 auf, der in dem ersten Behandlungsbereich 32 der Steigleitung 62 angebracht ist. Vorzugsweise weist der Rohmehleinlass 44 zumindest eine oder eine Mehrzahl von Rohmehlleitungen auf, die sich in radialer Richtung der Steigleitung erstrecken und beispielsweise umfangsmäßig um die Steigleitung auf einem Höhenniveau angeordnet sind. Die Rohmehlleitungen erstrecken sich vorzugsweise jeweils durch die Wand der Steigleitung 62 in den ersten Behandlungsbereich 32 hinein. Der erste Rohmehleinlass 44 ist beispielhaft in vertikaler Richtung mittig in dem ersten Behandlungsbereich 32 angeordnet. Die Anlage 14 weist einen zweiten Rohmehleinlass 46 auf, der beispielsweise identisch zu dem ersten Rohmehleinlass 44 ausgebildet ist und in dem zweiten Behandlungsbereich 33, vorzugsweise mittig, angeordnet ist.

Die Anlage 14 weist beispielhaft zwei Brennstoffeinlässe 48, 50 auf, die beide in dem zweiten Behandlungsbereich 33 angeordnet sind. Die Brennstoffeinlässe 48, 50 weisen beispielsweise jeweils zumindest eine oder eine Mehrzahl von Brennstoffleitungen auf, die sich in radialer Richtung der Steigleitung 62 erstrecken und beispielsweise umfangsmäßig um die Steigleitung 62 auf einem Höhenniveau angeordnet sind. Die Brennstoffleitungen erstrecken sich vorzugsweise jeweils durch die Wand der Steigleitung 62 in den zweiten Behandlungsbereich 33 hinein. Die Brennstoffeinlässe 48, 50 sind in Strömungsrichtung des Gases hintereinander in dem zweiten Behandlungsbereich 33 auf unterschiedlichen Höhenniveaus der Steigleitung 62 angeordnet. Beispielhaft ist der erste Brennstoffeinlass 48 in einem unteren Bereich, insbesondere Einlassbereich, und der zweite Brennstoffeinlass 50 in einem oberen Bereich, insbesondere Auslassbereich, des zweiten Behandlungsbereichs 33 angeordnet. Der erste Brennstoffeinlass 48 ist beispielhaft stromaufwärts des zweiten Rohmehleinlasses 46 und der zweite Brennstoffeinlass 50 ist beispielhaft stromabwärts des zweiten Rohmehleinlasses 46 angeordnet.

Die Anlage 14 weist beispielhaft zwei Inertgaseinlässe 52, 54 auf, die jeweils in den zweiten Behandlungsbereich 32 münden. Der erste Inertgaseinlass 52 ist beispielhaft stromaufwärts des zweiten Rohmehleinlasses 46 und der zweite Inertgaseinlass 54 ist beispielsweise stromabwärts des zweiten Rohmehleinlasses 46 angeordnet.

Die Anlage 14 weist des Weiteren zwei Temperaturmesseinrichtungen 56, 58 auf, die beide innerhalb des zweiten Behandlungsbereichs 33 angebracht ist. Beispielhaft sind die Temperaturmesseinrichtungen 56, 58 jeweils einem Brennstoffeinlass 48, 50 zugeordnet und stromabwärts, vorzugsweise direkt an dem Brennstoffeinlass 48, 50 oder in der nahen Umgebung, angeordnet. Die erste Temperaturmesseinrichtung 56 ist beispielhaft dem ersten Brennstoffeinlass 48 und die zweite Temperaturmesseinrichtung 58 dem zweiten Brennstoffeinlass 50 zugeordnet.

Die Anlage 14 weist des Weiteren eine Regelungseinrichtung 60 auf, die mit den Temperaturmesseinrichtungen 58 zur Übermittlung der ermittelten Temperatur verbunden ist. Die Regelungseinrichtung 60 ist vorzugsweise mit dem ersten und dem zweiten Rohmehleinlass 44, 46 zur Regelung der Menge an durch den jeweiligen Rohmehleinlass 44, 46 in die Steigleitung 62 strömenden Rohmehls verbunden. Optional ist die Regelungseinrichtung 60 mit den Brennstoffeinlässen 48, 50 und/ oder den Inertagseinlässen 52, 54 zur Regelung der Menge an durch den jeweiligen Brennstoffeinlass 48, 50 und/ oder Inertgaseinlass 52, 54 in die Steigleitung 62 strömenden Brennstoffs und/ oder Inertgases verbunden. Die Rohmehleinlässe 46, 48, die Brennstoffeinlässe 48, 50 und/ oder die Inertgaseinlässe 52, 52 weisen beispielsweise Dosiereinrichtungen, wie Klappen oder Ventile auf, über welche die jeweilige Menge an Rohmehl, Brennstoff und Inertgas eingestellt werden kann. Die Dosiereinrichtungen sind vorzugswiese mit der Regelungseinrichtung verbunden.

Die Regelungseinrichtung 60 vergleicht die ermittelte Temperatur vorzugsweise mit einem vorabbestimmten Temperaturgrenzwert oder Temperaturgrenzbereich. Insbesondere ist die Regelungseinrichtung 60 derart ausgebildet, dass sie die Menge an Brennstoff in die Steigleitung 62 verringert oder erhöht, wenn die ermittelte Temperatur von dem Temperaturgrenzwert oder Temperaturgrenzbereich abweicht. Überschreitet beispielsweise die mittels einer der Temperaturmesseinrichtungen 56, 58 ermittelte Temperatur den Temperaturgrenzwert oder den Temperaturgrenzbereich, wird die Menge an Brennstoff, der durch den der jeweiligen Temperaturmesseinrichtung 56, 58 zugeordneten Brennstoffeinlass 48, 50 in den zweiten Behandlungsbereich 33 strömt verringert. Unterschreitet beispielsweise die mittels einer der Temperaturmesseinrichtungen 56, 58 ermittelte Temperatur den Temperaturgrenzwert oder den Temperaturgrenzbereich, wird die Menge an Brennstoff, der durch den der jeweiligen Temperaturmesseinrichtung 56, 58 zugeordneten Brennstoffeinlass 48, 50 in den zweiten Behandlungsbereich 33 strömt erhöht.

Insbesondere ist die Regelungseinrichtung 60 derart ausgebildet, dass sie die Menge an Inertgas in die Steigleitung 62 verringert oder erhöht, wenn die ermittelte Temperatur von dem Temperaturgrenzwert oder Temperaturgrenzbereich abweicht. Überschreitet beispielsweise die mittels einer der Temperaturmesseinrichtungen 56, 58 ermittelte Temperatur den Temperaturgrenzwert oder den Temperaturgrenzbereich, wird die Menge an Inertgas, der durch den der jeweiligen Temperaturmesseinrichtung 56, 58 zugeordneten Inertgaseinlass 52, 54 in den zweiten Behandlungsbereich 33 strömt verringert. Unterschreitet beispielsweise die mittels einer der Temperaturmesseinrichtungen 56, 58 ermittelte Temperatur den Temperaturgrenzwert oder den Temperaturgrenzbereich, wird die Menge an Inertgas, der durch den der jeweiligen Temperaturmesseinrichtung 56, 58 zugeordneten Inertgaseinlass 52, 54 in den zweiten Behandlungsbereich 33 strömt erhöht. Bei dem der jeweiligen Temperaturmesseinrichtung 56, 58 zugeordneten Inertgaseinlass 52, 54 oder Brennstoffeinlass 48, 50 handelt es sich vorzugsweise um den Inertgaseinlass 52, 64 und Brennstoffeinlass 48, 50, der der jeweiligen Temperaturmesseinrichtung 56, 58 am nächsten ist.

Insbesondere ist die Regelungseinrichtung 60 derart ausgebildet, dass sie die Menge an Rohmehl in die Steigleitung 62 verringert oder erhöht, wenn die ermittelte Temperatur von dem Temperaturgrenzwert oder Temperaturgrenzbereich abweicht. Überschreitet beispielsweise die mittels einer der Temperaturmesseinrichtungen 56, 58 ermittelte Temperatur den Temperaturgrenzwert oder den Temperaturgrenzbereich, wird die Menge an Rohmehl, die durch zumindest einen der Rohmehleinlässe 44, 46 strömt, erhöht. Vorzugsweise bleibt die gesamte in die Steigleitung 62 strömende Menge an Rohmehl konstant, sodass die Rohmehlmenge an einem Rohmehleinlass 44 verringert und an dem zumindest einen weiteren Rohmehleinlass 46 entsprechend erhöht wird. Unterschreitet beispielsweise die mittels einer der Temperaturmesseinrichtungen 56, 58 ermittelte Temperatur den Temperaturgrenzwert oder den Temperaturgrenzbereich, wird die Menge an Rohmehl, die durch zumindest einen der Rohmehleinlässe 44, 46 strömt, verringert. Beispielsweise wird bei einer Grenzwert- oder Grenzbreichsunterschreitung die Menge an Rohmehl, die durch den zweiten Rohmehleinlass 46 in den zweiten Behandlungsbereich 33 strömt, verringert und die Menge an Rohmehl durch den ersten Rohmehleinlass 44 entsprechend erhöht.

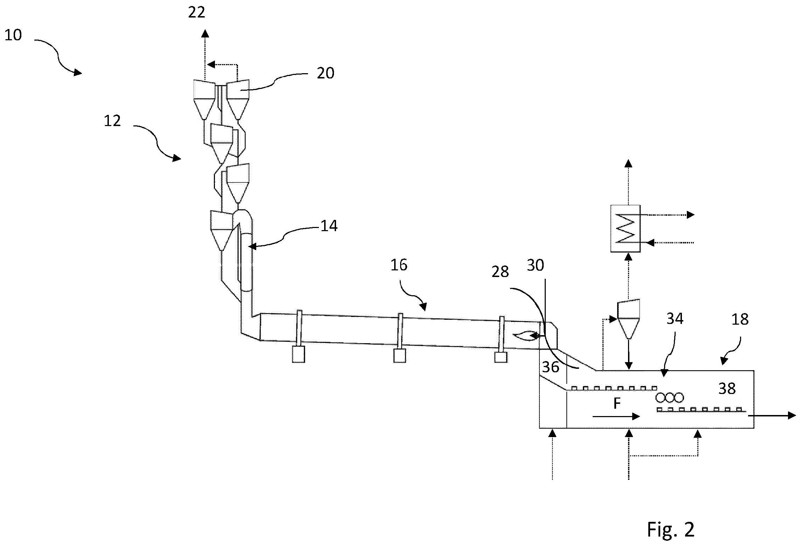

Fig. 2 zeigt eine Zementherstellungsanlage 10 mit einem einsträngigen Vorwärmer 12 zur Vorwärmung von Rohmehl, einen Calcinator 14 zum Kalzinieren des Rohmehls, einen Ofen 16, insbesondere einen Drehrohrofen zum Brennen des Rohmehls zu Klinker und einen Kühler 18 zum Kühlen des in dem Ofen 16 gebrannten Klinkers. Bei dem Calcinator 14 handelt es sich beispielsweise um eine mit Bezug auf Fig. 1 beschriebene Anlage zur thermischen Behandlung.

Der Vorwärmer 12 umfasst eine Mehrzahl von Zyklonen 20 zum Abscheiden des Rohmehls aus dem Rohmehlgasstrom. Beispielhaft weist der Vorwärmer 12 fünf Zyklone 20 auf, die in vier Zyklonstufen untereinander angeordnet sind. Der Vorwärmer 12 weist einen nicht dargestellten Materialeinlass zum Einlassen von Rohmehl in die zwei Zyklone 20 umfassende, oberste Zyklonstufe des Vorwärmers 12 auf. Das Rohmehl durchströmt nacheinander die Zyklone 20 der Zyklonstufen im Gegenstrom zu dem Ofen- und/oder Calcinatorabgas und wird dadurch erwärmt.

Zwischen der letzten und der vorletzten Zyklonstufe ist der Calcinator 14 angeordnet. Der Calcinator 14 weist eine Steigleitung, insbesondere ein Steigrohr, mit mindestens einer Calcinatorfeuerung zum Erhitzen des Rohmehls auf, sodass eine Kalzinierung des Rohmehls in dem Calcinator 14 erfolgt. Des Weiteren weist der Calcinator 14 einen Brennstoffeinlass zum Einlassen von Brennstoff und einen Inertgaseinlass zum Einlassen eines Inertgases in die Steigleitung auf. Der Calcinator 14 weist weiter einen Verbrennungsgaseinlass zum Einlassen von beispielsweise sauerstoffhaltigem Verbrennungsgas in die Steigleitung des Calcinators 14 auf. Bei dem Verbrennungsgas handelt es sich insbesondere um das Ofenabgas, das mit Sauerstoff angereichert ist. Der Sauerstoffanteil des Verbrennungsgases beträgt beispielsweise maximal 85% zwischen dem Ofen 16 und dem Calcinator 14. Das Calcinatorabgas wird in den Vorwärmer 12, vorzugsweise in die vorletzte Zyklonstufe eingeleitet und verlässt den Vorwärmer 12 hinter der obersten Zyklonstufe als Vorwärmerabgas 22.

Der Calcinator 14 weist beispielsweise zwei Brennstoffaufgabevorrichtungen auf. Es ist ebenfalls denkbar, dass der Calcinator 14 lediglich genau eine Brennstoffaufgabevorrichtung oder mehr als zwei Brennstoffaufgabevorrichtungen aufweist. Die beiden Brennstoffaufgabevorrichtungen sind optional zueinander beabstandet an der Steigleitung 62 des Calcinators 14 angebracht. Insbesondere sind die Brennstoffaufgabevorrichtungen auf unterschiedlichen Höhenniveaus an der Steigleitung 62 angebracht. Jeder Brennstoffaufgabevorrichtung ist jeweils ein Brennstoffeinlass 48, 50 und ein Inertgaseinlass 52, 54 zugeordnet, sodass Brennstoff und Inertgas in die jeweilige Brennstoffaufgabevorrichtung geleitet wird. Die Brennstoffaufgabevorrichtungen sind beispielhaft um 180° zueinander versetzt angeordnet. Beispielsweise weist die Brennstoffaufgabevorrichtung ein Mittel zum Transportieren des Brennstoffs, wie eine Förderschnecke oder eine Schurre auf. Der Eintrag des oder der Brennstoffe kann beispielsweise auch durch die Förderung mit Hilfe eines Inertgases pneumatisch erfolgen. Der Rohmehleinlass in den Calcinator 14 wird beispielsweise durch den Feststoffauslass des der vorletzten Zyklonstufe gebildet.

In Strömungsrichtung des Rohmehls ist dem Vorwärmer 12 der Ofen 16 nachgeschaltet, sodass das in dem Vorwärmer 12 vorgewärmte und in dem Calcinator 14 kalzinierte Rohmehl in den Ofen 16 strömt. Der Materialeinlass/ Gasauslass des Ofens 16 ist direkt mit der Steigleitung des Calcinators 14 verbunden, sodass das Ofenabgas in den Calcinator 14 und anschließend in den Vorwärmer 12 strömt. Bei dem Ofen 16 handelt es sich beispielhaft um einen Drehrohrofen mit einem um seine Längsachse rotierbaren Drehrohr, das in einem leicht abfallenden Winkel angeordnet ist. Der Ofen 12 weist an dem materialauslassseitigen Ende innerhalb des Drehrohrs einen Ofenbrenner 28 und einen zugehörigen Brennstoffeinlass 30 auf. Der Materialauslass des Ofens 16 ist an dem Materialeinlass 25 gegenüberliegenden Ende des Drehrohrs angeordnet, sodass das Rohmehl innerhalb des Drehrohrs durch die Rotation des Drehrohrs in Richtung des Ofenbrenners 28 und des Materialauslasses gefördert wird. Das Rohmehl wird innerhalb des Ofens 16 zu Zementklinker gebrannt. Die Sinterzone umfasst den materialauslassseitigen, hinteren Bereich des Drehrohrs, vorzugsweise das in Materialströmungsrichtung hintere Drittel.

Dem Ofenbrenner 28 ist beispielsweise ein Brennstoffeinlass 30 und ein Inertgaseinlass zugeordnet, sodass Brennstoff und Inertgas zu dem Ofenbrenner 28 geleitet wird. Der Brennstoffeinlass 30 und der Inertgaseinlass sind beispielsweise separat zueinander oder als ein gemeinsamer Einlass in den Calcinator 14 oder den Ofen 16 ausgebildet. Bei dem Inertgas handelt es sich beispielsweise um CO2 oder Wasserdampf. Das Inertgas kann sowohl als Fördermittel als auch zur Beeinflussung der Zündung oder Kontrolle des Verbrennungsprozesses dienen.

An den Materialauslass des Ofens 16 schließt sich der Kühler 18 zum Kühlen des Klinkers an. Der Kühler 18 weist einen Kühlgasraum 34 auf, in dem der Klinker durch einen Kühlgasstrom gekühlt wird. Der Klinker wird In Förderrichtung F durch den Kühlgasraum 34 gefördert. Der Kühlgasraum 34 weist beispielhaft einen ersten Kühlgasraumabschnitt 36 und einen zweiten Kühlgasraumabschnitt 38 auf, der sich in Förderrichtung F an den ersten Kühlgasraumabschnitt 36 anschließt. Der Ofen 16 ist über den Materialauslass des Ofens 16 mit dem Kühler 18 verbunden, sodass der in dem Drehrohrofen 20 gebrannte Klinker in den Kühler 18 fällt.

Der erste Kühlgasraumabschnitt 36 ist unterhalb des Materialauslasses des Ofens 16 angeordnet, sodass der Klinker von dem Ofen 16 in den ersten Kühlgasraumabschnitt 36 fällt. Der erste Kühlgasraumabschnitt 36 stellt einen Einlaufbereich des Kühlers 18 dar und weist vorzugsweise einen statischen Rost auf, der den aus dem Ofen 16 austretenden Klinker aufnimmt. Der statische Rost ist insbesondere vollständig in dem ersten Kühlgasraumabschnitt 36 des Kühlers 10 angeordnet. Vorzugsweise fällt der Klinker aus dem Ofen 16 direkt auf den statischen Rost. Der statische Rost erstreckt sich vorzugsweise vollständig in einem Winkel von 10° bis 35°, vorzugsweise 14° bis 33°, insbesondere 21° bis 25° zur Horizontalen, sodass der Klinker in Förderrichtung entlang des statischen Rostes 40 auf diesem gleitet.

An den ersten Kühlgasraumabschnitt 36, schließt sich der zweiter Kühlgasraumabschnitt 38 des Kühlers 18 an. In dem ersten Kühlgasraumabschnitt 36 des Kühlers 18 wird der Klinker insbesondere auf eine Temperatur von weniger als 1000°C abgekühlt, wobei die Abkühlung derart erfolgt, dass ein vollständiges Erstarren von in dem Klinker vorhandenen flüssigen Phasen in feste Phasen erfolgt. Beim Verlassen des ersten Kühlgasraumabschnitt 36 des Kühlers 18 liegt der Klinker vorzugsweise vollständig in der festen Phase und einer Temperatur von maximal 1150°C vor. In dem zweiten Kühlgasraumabschnitt 38 des Kühlers 18 wird der Klinker weiter abgekühlt, vorzugsweise auf eine Temperatur von weniger als 100°C. Vorzugsweise kann der zweite Kühlgasstrom auf mehrere Teilgasströme aufgeteilt werden, die unterschiedliche Temperaturen aufweisen.

Der statische Rost des ersten Kühlgasraumabschnitts 36 weist beispielsweise Durchlässe auf, durch welche ein Kühlgas in den Kühler 18 und den Klinker eintritt. Das Kühlgas wird beispielsweise durch wenigstens einen unterhalb des statischen Rosts angeordneten Ventilator, Gebläse oder Druckbehälter erzeugt, sodass ein erster Kühlgasstrom von unten durch den statischen Rost in den ersten Kühlgasraumabschnitt 36 strömt. Bei dem ersten Kühlgasstrom handelt es sich beispielsweise um reinen Sauerstoff oder ein Gas mit einem Anteil von 15 Vol% oder weniger Stickstoff und einem Anteil von 30 Vol% oder mehr Sauerstoff. Der erste Kühlgasstrom durchströmt den Klinker und strömt anschließend in den Ofen 16. Der erste Kühlgasstrom bildet beispielsweise teilweise oder vollständig das Verbrennungsgas des Ofens 16 aus. Der hohe Anteil an Sauerstoff in dem Verbrennungsgas führt zu einem Vorwärmerabgas, das im Wesentlichen aus CO2 und Wasserdampf besteht und weist den Vorteil auf, dass auf aufwändige nachgeschaltete Reinigungsverfahren zur Abgasreinigung verzichtet werden kann. Des Weiteren wird eine Reduktion der Prozessgasmengen erreicht, sodass die Anlage erheblich kleiner dimensioniert werden kann.

Innerhalb des Kühlers 18 wird der zu kühlende Klinker in Förderrichtung F bewegt. Der zweite Kühlgasraumabschnitt 38 weist vorzugsweise einen dynamischen, insbesondere bewegbaren, Rost auf, der sich in Förderrichtung F an den statischen Rost anschließt. Unterhalb des dynamischen Rosts sind beispielhaft eine Mehrzahl von Ventilatoren angeordnet, mittels welcher der zweite Kühlgasstrom von unten durch den dynamischen Rost geblasen wird. Bei dem zweiten Kühlgasstrom handelt es sich beispielsweise um Luft.

An den dynamischen Rost des zweiten Kühlgasraumabschnitts 38 schließt sich in Fig. 1 beispielhaft eine Zerkleinerungseinrichtung 48 an. An die Zerkleinerungseinrichtung 48 ein weiterer dynamischer Rost unterhalb der Zerkleinerungseinrichtung 48 an. Vorzugsweise weist der Kaltklinker beim Verlassen des Kühlers 18 eine Temperatur von 100°C oder weniger auf.

Aus dem zweiten Kühlgasraumabschnitt 38 wird beispielsweise Kühlerabluft abgeführt und in einen Abscheider, wie beispielsweise einen Zyklon, zum Abscheiden von Feststoffen geführt. Die Feststoffe werden beispielhaft dem Kühler 18 wieder zugeführt. Dem Abscheider ist ein Luft-Luft Wärmetauscher nachgeschaltet, sodass die Kühlerabluft innerhalb des Wärmetauschers Luft vorwärmt, die beispielsweise einer Rohmühle zugeführt wird.

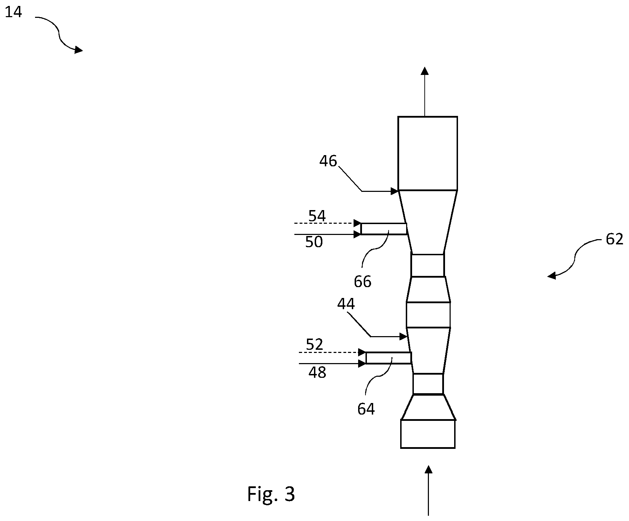

Fig. 3 zeigt ein weiteres Ausführungsbeispiel einer Anlage zu thermischen Behandlung 14, insbesondere eines Calcinators, der zumindest teilweise der Anlage 14 der Fig.1 entspricht, wobei gleiche Bezugszeichen gleich Elemente darstellen. An der Steigleitung 62 sind beispielhaft zwei Brennstoffaufgabevorrichtung 64, 66 angebracht, über welche jeweils Brennstoff und Inertgas zusammen aufgegeben wird.

Die Steigleitung 62 der Anlage 14 weist eine Mehrzahl von unterschiedlichen Querschittsflächen auf. Die Brennstoffaufgabevorrichtungen 64, 66 der Anlage 14 sind beispielhaft ohne Winkelversatz, an der gleichen Seite der Steigleitung 62, aber auf unterschiedlichen Höhenniveaus angebracht. In Strömungsrichtung des Gases innerhalb der Steigleitung 62 ist jeder Brennstoffaufgabevorrichtung jeweils ein Rohmehleinlass 44, 46 direkt vorzugsweise vor und/oder nachgeschaltet. Der Brennstoffeinlass 48, 50 und der Inertgaseinlass 52, 54 ist jeweils an der Brennstoffaufgabevorrichtung 64, 66 des Calcinators 14, insbesondere auf gleicher Höhe mit der jeweiligen Brennstoffaufgabevorrichtung, angeordnet.

Die Querschnittsverengungen sorgen für eine ausgewogene Vermischung innerhalb der Steigleitung und führen somit zu einer Vergleichmäßigung der Verbrennung und der Temperaturverteilung in Längs- und Querrichtung der Steigleitung des Calcinators.

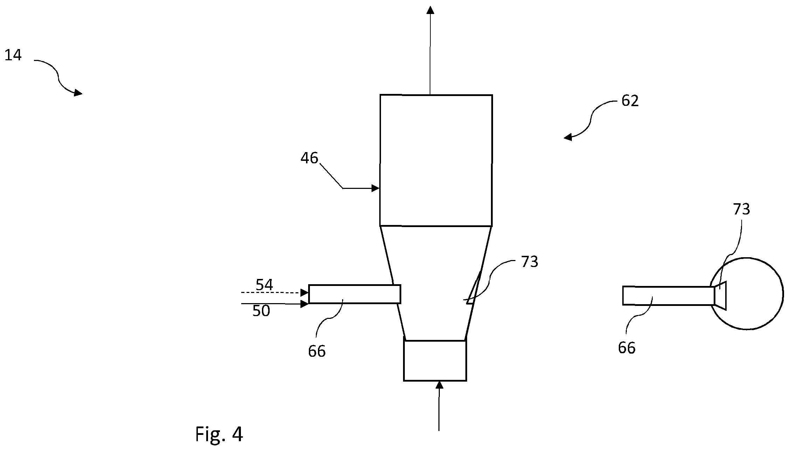

Fig. 4 zeigt einen Ausschnitt einer Anlage 14, insbesondere eines Calcinators 14, gemäß der Fig. 1 bis 3, wobei gleiche Bezugszeichen gleich Elemente darstellen. Die Anlage 14 weist ein Leitelement 73 auf, das in der linken Darstellung beispielhaft innerhalb der Steigleitung 62 und in der rechten Darstellung beispielhaft an der Brennstoffaufgabevorrichtung in der speziellen Form eines Flammrohres angebracht ist.

In der linken Darstellung ist das Leitelement 73 derart angeordnet, dass es eine Verengung des Querschnitts der Steigleitung 62 bewirkt. Das Leitelement 73 ist insbesondere plattenförmig, kammerförmig oder kastenförmig ausgebildet und an der Innenwand der Steigleitung 62 und beispielhaft auf der gleichen Höhe und gegenüberliegend zu der Brennstoffaufgabevorrichtung 66 angebracht.

In der rechten Darstellung weist das Leitelement 73 das Leitelement beispielhaft die Gestalt eines Diffusors auf, wobei sich der Querschnitt des Leitelements 73 in Strömungsrichtung des Brennstoffs vergrößert. Das Leitelement 73 ist an der Brennstoffaufgabevorrichtung, insbesondere an der Mündung der Brennstoffaufgabevorrichtung in die Steigleitung 62 angebracht und ermöglicht insbesondere eine gezielte Einleitung des Brennstoffs in die Steigleitung 62. Es ist ebenfalls denkbar, dass das Leitelement 73 bündig mit der Steigleitung abschließt und nicht in diese hineinragt, sodass ein gleichmäßiger Einlass des Brennstoffs in die Steigleitung 62 ermöglicht wird.

Das Leitelement 73 ist beispielsweise aus einer hochtemperaturfesten Keramik oder einem Faserverbundwerkstoff ausgebildet.

### Bezugszeichenliste

- 10: Zementherstellungsanlage
- 12: Vorwärmer
- 14: Anlage zur thermischen Behandlung / Calcinator
- 16: Ofen
- 18: Kühler
- 20: Zyklon
- 22: Vorwärmerabgas
- 28: Brenner oder Brennerlanze des Ofens
- 30: Brennstoffeinlass des Ofens
- 32: erster Behandlungsbereich
- 33: zweiter Behandlungsbereich
- 34: Kühlgasraum
- 36: erster Kühlgasraumabschnitt
- 38: zweiter Kühlgasraumabschnitt
- 40: Querschnittsverengung
- 42: Querschnittsverengung
- 44: erster Rohmehleinlass
- 46: zweiter Rohmehleinlass
- 48: erster Brennstoffeinlass
- 50: zweiter Brennstoffeinlass
- 52: erster Inertgaseinlass
- 54: zweiter Inertgaseinlass
- 56: Temperaturmesseinrichtung
- 58: Temperaturmesseinrichtung
- 60: Regelungseinrichtung
- 62: Steigleitung
- 64: Brennstoffaufgabevorrichtung
- 66: Brennstoffaufgabevorrichtung
- 73: Leitelement

## Patentansprüche

1. Verfahren zur thermischen Behandlung von flugfähigem Rohmaterial, insbesondere Zementrohmehl und/oder mineralische Produkte, aufweisen die Schritte:
- Einlassen von Brennstoff über einen Brennstoffeinlass (48, 50) in eine Steigleitung (62) zur Leitung von Heißgasen und
- Einlassen von Rohmehl in die Steigleitung (62),
**dadurch gekennzeichnet, dass**
das Rohmehl in Strömungsrichtung des Gases stromaufwärts des Brennstoffeinlasses (48, 50) in die Steigleitung (62) eingeleitet wird, wobei ein Inertgas in die Steigleitung (62) eingeleitet wird.

2. Verfahren nach Anspruch 1, wobei die Steigleitung (62) zumindest zwei in Strömungsrichtung des Gases hintereinander angeordnete Behandlungsbereiche (32, 33) aufweist, die voneinander verschiedene Durchmesser aufweisen und wobei das Rohmehl in den in Strömungsrichtung des Gases vorderen Behandlungsbereich (32) eingeleitet wird.

3. Verfahren nach einem der Ansprüche 1 oder 2, wobei die Temperatur mittels zumindest einer Temperaturmesseinrichtung (56, 58) innerhalb der Steigleitung (62) ermittelt wird und wobei die Menge an Rohmehl, Inertgas und/ oder Brennstoff in die Steigleitung in Abhängigkeit der ermittelten Temperatur geregelt wird.

4. Verfahren nach einem der Ansprüche 1 bis 3, wobei Brennstoff über zumindest zwei in Strömungsrichtung des Gases hintereinander angeordnete Brennstoffeinlässe (48, 50) in die Steigleitung (62) eingeleitet wird und wobei an dem in Strömungsrichtung vorderen Brennstoffeinlass (48, 50) mehr Brennstoff als an dem anderen Brennstoffeinlass (48, 50) eingeleitet wird.

5. Verfahren nach einem der Ansprüche 1 bis 4, wobei in den vorderen Behandlungsbereich (32) eine Menge an Rohmehl eingeleitet wird, die etwa 20% bis 60% der gesamten in die Steigleitung (62) eingeleiteten Menge an Rohmehl entspricht.

## Claims

1. A method for thermal treatment of free-floating raw material, in particular cement raw meal and/or mineral products, having the following steps:
- introducing fuel via a fuel inlet (48, 50) into a riser line (62) for guiding hot gases and
- introducing raw meal into the riser line (62),
**characterized in that**
the raw meal is introduced into the riser line (62) upstream of the fuel inlet (48, 50) in the flow direction of the gas, wherein an inert gas is introduced into the riser line (62).

2. The method as claimed in claim 1, wherein the riser line (62) has at least two treatment regions (32, 33) arranged in succession in the flow direction of the gas, which have diameters different from one another, and wherein the raw meal is introduced into the front treatment region (32) in the flow direction of the gas.

3. The method as claimed in any one of claims 1 or 2, wherein the temperature is ascertained by means of at least one temperature measuring unit (56, 58) inside the riser line (62), and wherein the amount of raw meal, inert gas, and/or fuel in the riser line is regulated in dependence on the ascertained temperature.

4. The method as claimed in any one of claims 1 to 3, wherein fuel is introduced into the riser line (62) via at least two fuel inlets (48, 50) arranged in succession in the flow direction of the gas, and wherein more fuel is introduced at the front fuel inlet (48, 50) in the flow direction than at the other fuel inlet (48, 50).

5. The method as claimed in any one of claims 1 to 4, wherein an amount of raw meal is introduced into the front treatment region (32), which corresponds to approximately 20% to 60% of the total amount of raw meal introduced into the riser line (62).

## Revendications

1. Un procédé de traitement thermique de matière première en suspension libre, en particulier de farine crue de ciment et/ou de produits minéraux, comprenant les étapes suivantes :
• introduire du combustible via une entrée de combustible (48, 50) dans une conduite montante (62) pour guider des gaz chauds et
• introduire de la farine crue dans la conduite montante (62),
**caractérisé en ce que**
la farine crue est introduite dans la conduite montante (62) en amont de l'entrée de combustible (48, 50) dans la direction d'écoulement du gaz, où un gaz inerte est introduit dans la conduite montante (62).

2. Le procédé selon la revendication 1, dans lequel la conduite montante (62) présente au moins deux régions de traitement (32, 33) disposées successivement dans la direction d'écoulement du gaz, qui ont des diamètres différents l'un de l'autre, et dans lequel la farine crue est introduite dans la région de traitement avant (32) dans la direction d'écoulement du gaz.

3. Le procédé selon l'une quelconque des revendications 1 ou 2, dans lequel la température est déterminée au moyen d'au moins une unité de mesure de température (56, 58) à l'intérieur de la conduite montante (62), et dans lequel la quantité de farine crue, de gaz inerte, et/ou de combustible dans la conduite montante est régulée en fonction de la température déterminée.

4. Le procédé selon l'une quelconque des revendications 1 à 3, dans lequel du combustible est introduit dans la conduite montante (62) via au moins deux entrées de combustible (48, 50) disposées successivement dans la direction d'écoulement du gaz, et dans lequel plus de combustible est introduit à l'entrée de combustible avant (48, 50) dans la direction d'écoulement que dans l'autre entrée de combustible (48, 50).

5. Le procédé selon l'une quelconque des revendications 1 à 4, dans lequel une quantité de farine crue est introduite dans la région de traitement avant (32), qui correspond à environ 20% à 60% de la quantité totale de farine crue introduite dans la conduite montante (62).
